# EUROPEAN PATENT SPECIFICATION

(11) **EP 3 222 401 B1**
(45) Date of publication and mention of the grant of the patent: **06.03.2019**
(21) Application number: 17161010.8
(22) Date of filing: 15.03.2017
(51) Int. Cl.: B29C 45/17, B29C 45/50

(54) **INJECTION MOLDING MACHINE**
SPRITZGIESSMASCHINE
MACHINE DE MOULAGE À INJECTION

(30) Priority: 24.03.2016 JP 2016060667
(43) Date of publication of application: 27.09.2017
(73) Proprietor: Sumitomo Heavy Industries, Ltd., Tokyo 141-6025 (JP)
(72) Inventor: MATSUTAKE, Yoshitaka, Chiba 263-0001 (JP)
(74) Representative: Louis Pöhlau Lohrentz

(56) References cited:
- WO-A1-2014/021051
- WO-A1-2014/092043
- WO-A1-2015/025806
- GB-A- 1 173 547
- US-A1- 2003 049 351
- US-A1- 2006 127 528
- US-A1- 2007 087 080

## Description

### BACKGROUND OF THE INVENTION

### Field of the Invention

Certain embodiments of the present invention relate to an injection molding machine.

### Description of Related Art

An injection molding machine disclosed in Japanese Unexamined Patent Application Publication No. 2001-341176 has a base capable of moving forward and backward with respect to a mold, and an injection unit main body which is entirely disposed on the base. The injection unit main body has a heating barrel which is butted against the mold, and a screw which is disposed so as to be able to advance and retract in the heating barrel, and advances the screw, thereby injecting a melted material in the heating barrel into a cavity of the mold. A housing supporting the heating barrel is mounted on the front side of the base, and a movable member which is guided on the base is provided at the back of the housing. A linear guide or the like is provided on the lower surface of the movable member, and the movable member slides on the base, whereby the screw advances and retracts in the heating barrel.

United States Patent Application US 2006/127528 describes an injection molding machine with a guide carriage which can be driven on a linear guide and to which the injection unit is attached.

United States Patent Application US 2006/127528 discloses an injection molding machine in which a whole injection unit is supported by a slidable support and by an additional guide shoe unit below a drive unit at a rear section.

Conventionally, a guide for the entire injection unit main body and a guide for the movable member are separately provided, and a base which advances and retracts on a frame while supporting the entire injection unit main body is needed. This base exists between the frame and the injection unit main body, and therefore, the dimension of the injection molding machine in a direction perpendicular to a fixed surface of the guide in the frame is large.

### SUMMARY OF THE INVENTION

The present invention has been made in view of the above problem and has a main object to provide an injection molding machine in which the dimension of the injection molding machine in a direction perpendicular to a fixed surface of a guide in a frame can be shortened and which can more easily be maintained.

In order to solve the above problem, according to an aspect of the present invention, there is provided an injection molding machine including: a cylinder into which a molding material is fed; a front support which supports the cylinder and advances and retracts with respect to a frame; an injection member which is disposed in the cylinder so as to be able to advance and retract; a rear support which supports the injection member and advances and retracts with respect to the frame at the back of the front support; and a guide which is fixed to the frame, in which the guide is used as a common guide for the front support and the rear support.

According to the aspect of the present invention, an injection molding machine is provided in which the dimension of the injection molding machine in a direction perpendicular to a fixed surface of a guide in a frame can be shortened.

### BRIEF DESCRIPTION OF THE DRAWINGS

Fig. 1 is a side view of an internal structure of an injection molding machine according to an embodiment.
Fig. 2 is a side view of the injection molding machine according to the embodiment.
Fig. 3 is a diagram showing a portion of Fig. 2 in an enlarged and broken manner.
Fig. 4 is a top view of the injection molding machine according to the embodiment.
Fig. 5 is a front view of the injection molding machine according to the embodiment.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

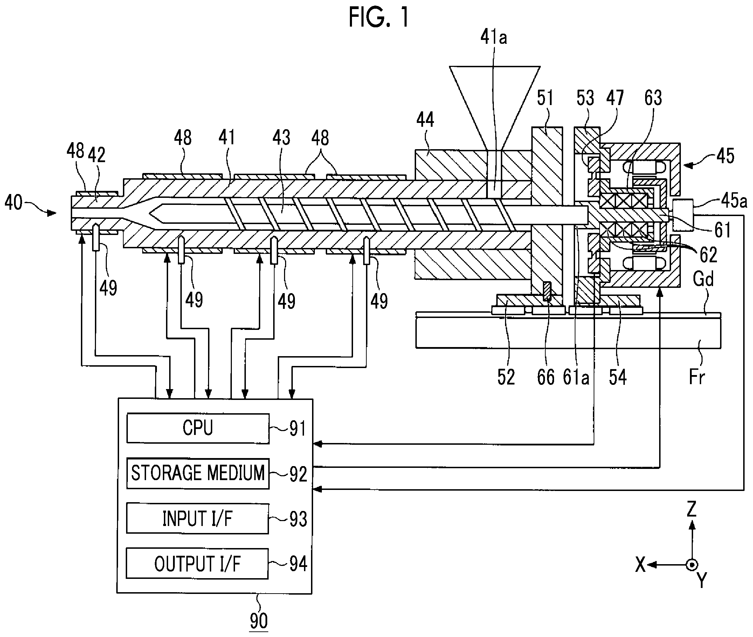

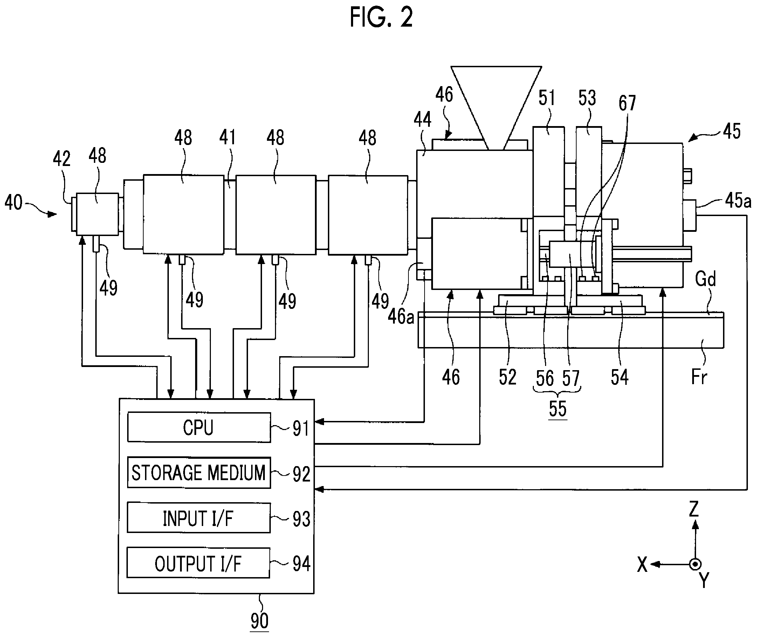

Fig. 1 is a side view of an internal structure of an injection molding machine according to an embodiment. Fig. 2 is a side view of the injection molding machine according to the embodiment. In each drawing, an X direction, a Y direction, and a Z direction are directions perpendicular to each other, the X direction is an axial direction of a cylinder 41, the Y direction is a direction parallel to a fixed surface of a guide Gd in a frame Fr, and the Z direction is a direction perpendicular to the fixed surface of the guide Gd in the frame Fr.

The injection molding machine has the frame Fr, an injection unit 40, and a controller 90. Hereinafter, a direction of movement (a leftward direction in Figs. 1 and 2) of a screw 43 when performing filling will be described as being forward and a direction of movement (a rightward direction in Figs. 1 and 2) of the screw 43 when performing plasticizing will be described as being backward.

The injection unit 40 is made so as to be able to advance and retract with respect to the frame Fr and made to be able to advance and retract with respect to a mold unit. The injection unit 40 is brought into contact with the mold unit and fills a cavity in the mold unit with a molding material. The molding material filled into the cavity is cooled and solidified, whereby a molding product is obtained. The injection unit 40 has, for example, the cylinder 41, a nozzle 42, the screw 43, a cooler 44, a plasticizing motor 45, an injection motor 46, a load detector 47, a heater 48, and a temperature detector 49, and the like.

The cylinder 41 heats the molding material fed from a feed port 41a into the inside thereof. The feed port 41a is formed in a rear portion of the cylinder 41. The cooler 44 such as a water-cooled cylinder is provided at the outer periphery of the rear portion of the cylinder 41. The heater 48 such as a band heater and the temperature detector 49 are provided further toward the forward side than the cooler 44 at the outer periphery of the cylinder 41.

The cylinder 41 is divided into a plurality of zones in the axial direction (a right-and-left direction in Figs. 1 and 2) of the cylinder 41. The heater 48 and the temperature detector 49 are provided in each zone. The controller 90 controls the heater 48 such that an actually measured temperature of the temperature detector 49 reaches a set temperature, for each zone. A rear end portion of the cylinder 41 is mounted on a front support 51. A front slider 52 on which the front support 51 is mounted slides along the guide Gd fixed to the frame Fr.

The nozzle 42 is provided at a front end portion of the cylinder 41 and pressed against the mold unit. The heater 48 and the temperature detector 49 are provided at the outer periphery of the nozzle 42. The controller 90 controls the heater 48 such that an actually measured temperature of the nozzle 42 reaches a set temperature.

The screw 43 is disposed so as to be rotatable and be able to advance and retract in the cylinder 41. If the screw 43 rotates, the molding material is sent forward along a helical groove of the screw 43. The molding material is gradually melted by the heat from the cylinder 41 while being sent forward. The screw 43 retracts as a liquid molding material is sent to the front of the screw 43 and accumulated in a front portion of the cylinder 41. Thereafter, if the screw 43 is advanced, the molding material in front of the screw 43 is injected from the nozzle 42 and filled into the mold unit. The screw 43 corresponds to an injection member stated in the appended claims.

The plasticizing motor 45 rotates the screw 43. The plasticizing motor 45 is mounted on a rear support 53 along with a bearing holder 63 which holds a bearing 62 rotatably supporting an output shaft 61 of the plasticizing motor 45, as shown in Fig. 1. A rear slider 54 on which the rear support 53 is mounted slides along the guide Gd at the back of the front slider 52.

The output shaft 61 of the plasticizing motor 45 is disposed on the same straight line as an extension shaft of the screw 43. The output shaft 61 of the plasticizing motor 45 has a fitting portion 61a into which the extension shaft of the screw 43 is fitted, in front of the bearing 62. The fitting portion 61a has an insertion hole into which the extension shaft of the screw 43 is inserted, and has a larger diameter than the extension shaft of the screw 43.

The plasticizing motor 45 of this embodiment is supported on the rear support 53 and made so as to be able to advance and retract with respect to the frame Fr. However, the plasticizing motor 45 may be fixed to the frame Fr further toward the rearward side than the rear support 53. In the latter case, the output shaft of the plasticizing motor 45 is splined to the extension shaft of the screw 43.

The output shaft of the plasticizing motor 45 of this embodiment is disposed on the same straight line as the extension shaft of the screw 43. However, the output shaft may be disposed to be shifted from the extension shaft of the screw 43. In the latter case, the rotation motion of the plasticizing motor 45 is transmitted to the screw 43 through a rotation transmitting member such as a belt or a pulley.

The injection motor 46 advances and retracts the screw 43. The injection motor 46 is mounted on the front support 51, as shown in Fig. 2. The rotation motion of the injection motor 46 is converted into the linear motion of the rear support 53 with respect to the front support 51 by a motion conversion mechanism 55.

The motion conversion mechanism 55 includes a screw shaft 56, and a screw nut 57 which is screwed to the screw shaft 56. Balls or rollers may be interposed between the screw shaft 56 and the screw nut 57.

In Fig. 2, the screw shaft 56 is connected to an output shaft of the injection motor 46 and the screw nut 57 is fixed to the rear support 53. If the injection motor 46 is driven and thus the output shaft thereof is rotated, the screw shaft 56 rotates, and thus the screw nut 57 advances and retracts, whereby the rear support 53 or the screw 43 advances and retracts.

The disposition of the screw shaft 56 and the screw nut 57 is not limited to the disposition in Fig. 2. As the disposition of the screw shaft 56 and the screw nut 57, in addition to the disposition in Fig. 2, disposition of the following (1) or disposition of the following (2) can be given as an example.
(1) Disposition is also acceptable in which the screw nut 57 is fixed to the output shaft of the injection motor 46 which is fixed to the front support 51 and the screw shaft 56 is fixed to the rear support 53. In this case, if the injection motor 46 is driven and thus the output shaft thereof is rotated, the screw nut 57 rotates, and thus the screw shaft 56 advances and retracts, whereby the rear support 53 or the screw 43 advances and retracts.
(2) Disposition is also acceptable in which the front end portion of the screw shaft 56 is splined to the output shaft of the injection motor 46 which is fixed to the front support 51, the rear end portion of the screw shaft 56 is rotatably supported on the rear support 53, and the screw nut 57 is fixed to the front support 51. In this case, if the injection motor 46 is driven and thus the output shaft thereof is rotated, the screw shaft 56 advances and retracts while rotating, whereby the rear support 53 or the screw advances and retracts.

The injection motor 46 of this embodiment is mounted on the front support 51. However, the injection motor 46 may be mounted on the rear support 53. The disposition of the screw shaft 56 and the screw nut 57 maybe appropriately changed according to the disposition of the injection motor 46.

The output shaft of the injection motor 46 of this embodiment is disposed on the same straight line as the screw shaft 56 or the screw nut 57. However, the output shaft may be disposed to be shifted from the screw shaft 56 or the screw nut 57. In this case, the rotation motion of the injection motor 46 is transmitted to the motion conversion mechanism 55 through a rotation transmitting member such as a belt or a pulley.

The load detector 47 is provided in a force transmission path between the injection motor 46 and the screw 43 and detects a load acting on the screw 43. For example, a load acting on the screw 43 from the molding material is transmitted to the load detector 47 through the extension shaft of the screw 43 or the output shaft 61 of the plasticizing motor 45, the bearing 62, the bearing holder 63, and the like. On the other hand, a drive force of the injection motor 46 which advances and retracts the screw 43 is transmitted to the load detector 47 through the motion conversion mechanism 55 or the rear support 53, and the like. The installation position of the load detector 47 is not particularly limited.

The load detector 47 sends a signal indicating the detection result thereof to the controller 90. The detection result of the load detector 47 is used for the control or monitoring of a pressure that the screw 43 receives from the molding material, a back pressure against the screw 43, a pressure acting on the molding material from the screw 43, or the like.

The controller 90 has a central processing unit (CPU) 91, a storage medium 92 such as a memory, an input interface 93, and an output interface 94, as shown in Figs. 1 and 2. The controller 90 performs various controls by executing a program stored in the storage medium 92 in the CPU 91. Further, the controller 90 receives a signal from the outside through the input interface 93 and transmits a signal to the outside through the output interface 94. The controller 90 controls a filling process, a holding pressure process, a plasticizing process, and the like.

In the filling process, the injection motor 46 is driven, thereby advancing the screw 43 at a set speed and thus filling the cavity in the mold unit with the liquid molding material accumulated in front of the screw 43. The position or the speed of the screw 43 is detected by using, for example, an encoder 46a of the injection motor 46. The encoder 46a detects the rotation of the injection motor 46 and sends a signal indicating the detection result thereof to the controller 90. If the position of the screw 43 reaches a set position, switching (so-called V/P switching) from the filling process to the holding pressure process is performed. The set speed of the screw 43 may be changed according to the position of the screw 43, a time, or the like.

After the position of the screw 43 reaches the set position in the filling process, the screw 43 may be temporarily stopped at the set position, and thereafter, the V/P switching may be performed. Just before the V/P switching, instead of stopping the screw 43, the screw 43 may be advanced or retracted at a very slow speed.

In the holding pressure process, the injection motor 46 is driven, thereby pressing the screw 43 forward at a set pressure and thus applying pressure to the molding material filled into the cavity in the mold unit. A molding material can be replenished when there is a shortage thereof due to cooling contraction. The pressure of the molding material is detected by using, for example, the load detector 47.

In the holding pressure process, the molding material in the cavity is gradually cooled, and at the time of the completion of the holding pressure process, an inlet of the cavity is closed with the solidified molding material. This state is called a gate seal, and back-flow of the molding material from the cavity is prevented. After the holding pressure process, a cooling process is started. In the cooling process, solidification of the molding material in the cavity is performed. The plasticizing process may be performed during the cooling process in order to shorten a molding cycle.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as the liquid molding material is sent to the front of the screw 43 and accumulated in the front portion of the cylinder 41. The rotational frequency of the screw 43 is detected by using, for example, an encoder 45a of the plasticizing motor 45. The encoder 45a sends a signal indicating the detection result thereof to the controller 90.

In the plasticizing process, in order to restrict the rapid retraction of the screw 43, a setting back pressure may be applied to the screw 43 by driving the injection motor 46. The back pressure against the screw 43 is detected by using, for example, the load detector 47. If the screw 43 retracts to a set position and a predetermined amount of molding material is accumulated in front of the screw 43, the plasticizing process is ended.

Incidentally, the guide Gd of this embodiment is used as a common guide for the front support 51 and the rear support 53. Accordingly, unlike a case where the guide for the entire injection unit 40 and the guide for the rear support 53 are separately provided as in the related art, a base which advances and retracts on the frame Fr while supporting the entire injection unit 40 is unnecessary. For this reason, the dimension in the Z direction of the injection molding machine can be shortened. Further, a cost can be reduced due to sharing of the guide.

The front support 51 is mounted on the front slider 52, and the rear support 53 is mounted on the rear slider 54. The rear slider 54 is provided at the back of the front slider 52, and the front slider 52 and the rear slider 54 slide along the same guide Gd.

At the time of the maintenance of the injection unit 40, work of turning the cylinder 41, the screw 43, or the like with respect to the frame Fr is performed. The maintenance of the cylinder 41 or the screw 43 is facilitated by deflecting the center line of the cylinder 41 or the screw 43 from the mold unit.

The front support 51 may be mounted on the front slider 52 so as to be able to turn about a pivot pin 66 (refer to Fig. 1) or the like. On the other hand, the rear support 53 may be detachably mounted on the rear slider 54 by a bolt 67 (refer to Fig. 2) or the like. By detaching the rear support 53 from the rear slider 54, turning of the front support 51 becomes possible . After maintenance, the rear support 53 is detachably mounted on the rear slider 54 again. In this case, the dimension in the Z direction of the injection molding machine can be shortened by an amount corresponding to the absence of a turn plate (described later) between the frame Fr and the guide Gd.

A configuration may be made in which the rear support 53 is turnably mounted on the rear slider 54 and the front support 51 is detachably mounted on the front slider 52. By detaching the front support 51 from the front slider 52, turning of the rear support 53 becomes possible. After maintenance, the front support 51 is detachably mounted on the front slider 52 again. Also in this case, the dimension in the Z direction of the injection molding machine can be shortened by an amount corresponding to the absence of a turn plate (described later) between the frame Fr and the guide Gd.

As means for turning the cylinder 41, the screw 43, or the like with respect to the frame Fr, a turn plate may be provided between the frame Fr and the guide Gd. The turn plate turns with respect to the frame Fr while holding the guide Gd. In this case, work of removing or mounting the rear support 53 from or on the rear slider 54, or work of removing or mounting the front support 51 from or on the front slider 52 is unnecessary.

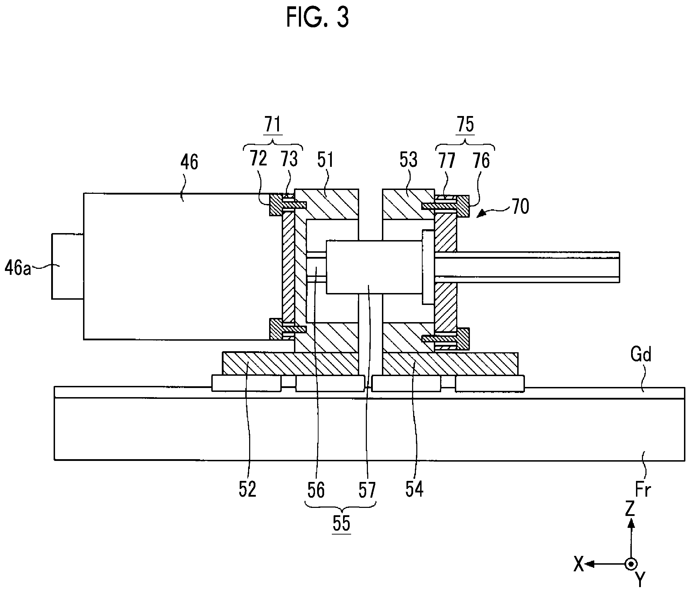

Fig. 3 is a diagram showing a portion of Fig. 2 in an enlarged and broken manner. The injection molding machine has an alignment mechanism 70 for aligning the center line of the screw shaft 56 with the center line of the screw nut 57. The alignment mechanism 70 has, for example, a first adjustment mechanism 71 for adjusting the mounting position of the injection motor 46, and a second adjustment mechanism 75 for adjusting the mounting position of the screw nut 57. The alignment mechanism 70 may have only one of the first adjustment mechanism 71 and the second adjustment mechanism 75.

The first adjustment mechanism 71 displaceably connects the injection motor 46 to the front support 51 when viewed in a front-and-back direction (when viewed in the X direction). The first adjustment mechanism 71 has, for example, a first adjustment bolt 72, and a first adjustment plate 73 having a bolt insertion hole into which a shaft portion of the first adjustment bolt 72 is inserted.

The shaft portion of the first adjustment bolt 72 is inserted into the bolt insertion hole of the first adjustment plate 73 and screwed into a bolt hole of the front support 51. A head portion of the first adjustment bolt 72 presses the first adjustment plate 73 against the front support 51.

The injection motor 46 is mounted on the first adjustment plate 73. The diameter of the bolt insertion hole of the first adjustment plate 73 is larger than the diameter of the shaft portion of the first adjustment bolt 72 and smaller than the diameter of the head portion of the first adjustment bolt 72.

By loosening the first adjustment bolt 72 and displacing the first adjustment plate 73 having the bolt insertion hole formed therein in a direction orthogonal to the axis of the first adjustment bolt 72, it is possible to displace the injection motor 46 or the screw shaft 56 with respect to the front support 51. After the alignment of the screw shaft 56 with the screw nut 57, the first adjustment bolt 72 is tightened.

The first adjustment mechanism 71 is not limited to the configuration in Fig. 3. For example, the mounting position of the injection motor 46 may be adjusted by changing the thickness, the shape, or the like of a shim which is sandwiched between the front support 51 and the injection motor 46.

The second adjustment mechanism 75 displaceably connects the screw nut 57 to the rear support 53 when viewed in the front-and-back direction. The second adjustment mechanism 75 has, for example, a second adjustment bolt 76, and a second adjustment plate 77 having a bolt insertion hole into which a shaft portion of the second adjustment bolt 76 is inserted.

The shaft portion of the second adjustment bolt 76 is inserted into the bolt insertion hole of the second adjustment plate 77 and screwed into a bolt hole of the rear support 53. A head portion of the second adjustment bolt 76 presses the second adjustment plate 77 against the rear support 53.

The screw nut 57 is mounted on the second adjustment plate 77. The diameter of the bolt insertion hole of the second adjustment plate 77 is larger than the diameter of the shaft portion of the second adjustment bolt 76 and smaller than the diameter of the head portion of the second adjustment bolt 76.

By loosening the second adjustment bolt 76 and displacing the second adjustment plate 77 having the bolt insertion hole formed therein in a direction orthogonal to the axis of the second adjustment bolt 76, it is possible to displace the screw nut 57 with respect to the rear support 53. After the alignment of the screw nut 57 with the screw shaft 56, the second adjustment bolt 76 is tightened.

The second adjustment mechanism 75 is not limited to the configuration in Fig. 3. For example, the mounting position of the screw nut 57 may be adjusted by changing the thickness, the shape, or the like of a shim which is sandwiched between the rear support 53 and the screw nut 57.

In this embodiment, the injection motor 46 is mounted on the front support 51 and the screw nut 57 is mounted on the rear support 53. However, as described above, the present invention is not limited thereto. The first adjustment mechanism 71 may displaceably connect the injection motor 46 to one of the front support 51 and the rear support 53 when viewed in the front-and-back direction. Further, the second adjustment mechanism 75 may displaceably connect the screw shaft 56 or the screw nut 57 to the other of the front support 51 and the rear support 53 when viewed in the front-and-back direction.

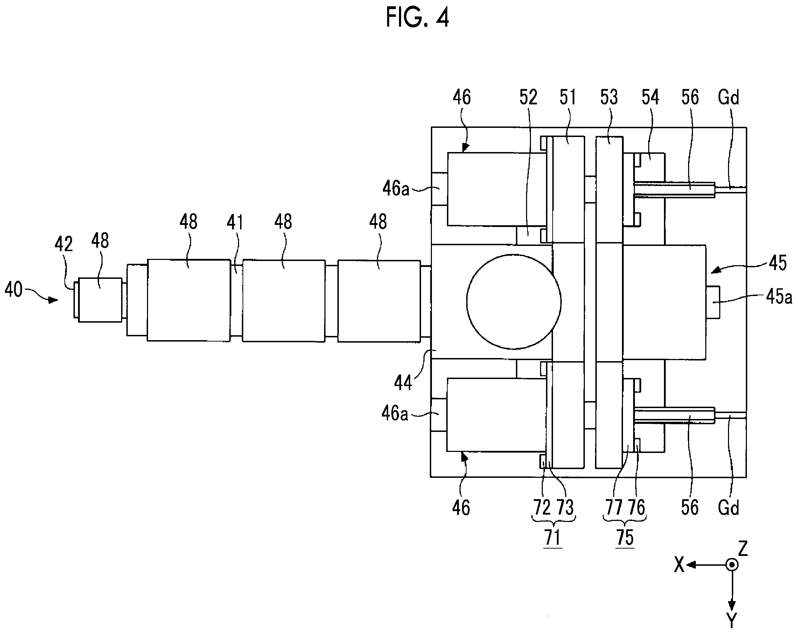

Fig. 4 is a top view of the injection molding machine according to the embodiment. As shown in Fig. 4, the screw shaft 56 and the guide Gd may overlap each other when viewed from a direction (the Z direction) perpendicular to the fixed surface of the guide Gd in the frame Fr. When the injection motor 46 is driven, thereby advancing and retracting the rear support 53 with respect to the front support 51, occurrence of the bending moment of the guide Gd due to the axial force of the screw shaft 56 when viewed in the Z direction can be suppressed, and thus distortion and breakage of the guide Gd can be suppressed.

In Fig. 4, a pair of guides Gd is provided, and a pair of screw shafts 56 is provided so as to overlap the pair of guides Gd when viewed in the Z direction. The number of guides Gd or the number of screw shafts 56 is not particularly limited. As long as one screw shaft 56 and one guide Gd overlap each other when viewed in the Z direction, the effect of suppressing distortion and breakage of the guide Gd is obtained.

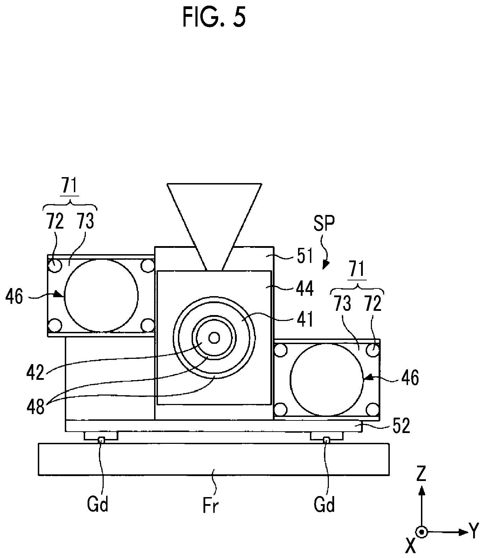

Fig. 5 is a front view of the injection molding machine according to the embodiment. As shown in Fig. 5, a plurality of injection motors 46 may be disposed symmetrically with the center line of the cylinder 41 as the center, when viewed in the front-and-back direction. It is possible to push the screw 43 in a well-balanced manner by the drive forces of the plurality of injection motors 46.

In Fig. 5, the plurality of injection motors 46 are disposed to be shifted from each other in a direction perpendicular to the fixed surface of the guide Gd in the frame Fr and are disposed at positions of different heights from the frame Fr. Accordingly, a space SP can be secured on one side of the cooler 44, and it is possible to provide machine parts or the like in the space SP. As the machine parts which are provided in the space SP, a discharge pipe or the like for discharging the molding material from the cylinder 41 can be given as an example.

The embodiment of the injection molding machine has been described above. However, the present invention is not limited to the above-described embodiment, and various modifications or improvements can be made within the scope of the concept of the present invention stated in the appended claims.

For example, the injection unit 40 of the above-described embodiment is a horizontal type in which the axial direction of the cylinder 41 is a horizontal direction. However, the injection unit 40 may be a vertical type in which the axial direction of the cylinder 41 is an up-and-down direction.

The injection unit 40 of the above-described embodiment is an inline screw type and the screw corresponds to the injection member stated in the appended claims. However, the present invention is not limited thereto. For example, the injection unit 40 may be a pre-plasticizing type. In a pre-plasticizing type injection unit, a molding material melted in a plasticizing cylinder is fed into an injection cylinder and the molding material is then injected from the injection cylinder into a mold unit. A screw is disposed in the plasticizing cylinder so as to be rotatable or to be rotatable and be able to advance and retract, and a plunger is disposed in the injection cylinder so as to be able to advance and retract. At least one of the screw and the plunger corresponds to the injection member stated in the appended claims.

### Brief Description of the Reference Symbols

- 40:: injection unit
- 41:: cylinder
- 42:: nozzle
- 43:: screw
- 45:: plasticizing motor
- 46:: injection motor
- 47:: load detector
- 90:: controller

## Claims

1. An injection molding machine comprising:
a cylinder (41) into which a molding material is fed;
a front support (51) which supports the cylinder (41) and advances and retracts with respect to a frame (Fr);
an injection member (43) which is disposed in the cylinder (41) so as to be able to advance and retract;
a rear support (53) which supports the injection member (43) and advances and retracts with respect to the frame (Fr) at the back of the front support (51);
a guide (Gd) which is fixed to the frame (Fr), wherein the guide (Gd) is used as a common guide (Gd) for the front support (51) and the rear support (53);
a front slider (52) on which the front support (51) is mounted, and which slides along the guide (Gd);
a rear slider (54) on which the rear support (53) is mounted, and which slides along the guide (Gd);
**characterized in that**
a) the rear support (53) can linearly move with respect to the front support (51); and
b1) the front support (51) is turnably mounted on the front slider (52), and the rear support (53) is detachably mounted on the rear slider (54), or
b2) the rear support (53) is turnably mounted on the rear slider (54), and the front support (51) is detachably mounted on the front slider (52).

2. The injection molding machine according to Claim 1, further comprising:
an injection motor (46) which advances and retracts the injection member (43) with respect to the cylinder; and
a motion conversion mechanism (55) which converts rotation motion of the injection motor (46) into linear motion of the rear support (53) with respect to the front support (51).

3. The injection molding machine according to Claim 2, wherein the motion conversion mechanism (55) has a screw shaft (56) and a screw nut (57) which is screwed to the screw shaft (56), and
the injection motor (46) is mounted on one of the front support (51) and the rear support (53) and the screw shaft (56) or the screw nut (57) is mounted on the other of the front support (51) and the rear support (53).

4. The injection molding machine according to Claim 3, further comprising:
an alignment mechanism for aligning a center line of the screw shaft (56) with a center line of the screw nut (57).

5. The injection molding machine according to Claim 3 or 4, wherein the screw shaft (56) and the guide (Gd) overlap each other when viewed from a direction perpendicular to a fixed surface of the guide (Gd) in the frame (Fr).

6. The injection molding machine according to any one of Claims 2 to 5, wherein a plurality of the injection motors (46) are disposed symmetrically with a center line of the cylinder (41) as the center.

7. The injection molding machine according to Claim 6, wherein the plurality of injection motors (46) are disposed to be shifted from each other in a direction perpendicular to the fixed surface of the guide (Gd) in the frame (Fr).

## Patentansprüche

1. Spritzgießmaschine, umfassend:
einen Zylinder (41), in den Gießmaterial zugeführt wird;
einen vorderen Träger (51), der den Zylinder (41) trägt und sich in Bezug auf einen Rahmen (Fr) vorwärts und rückwärts bewegt;
ein Einspritzelement (43), das in dem Zylinder (41) so angeordnet ist, dass es sich vorwärts und rückwärts bewegen kann;
einen hinteren Träger (53), der das Einspritzelement (43) trägt und es in Bezug auf den Rahmen (Fr) an der Rückseite des vorderen Trägers (51) vorwärts und rückwärts bewegt;
eine Führung (Gd), die an dem Rahmen (Fr) befestigt ist, wobei die Führung (Gd) als eine gemeinsame Führung (Gd) für den vorderen Träger (51) und den hinteren Träger (53) verwendet wird;
einen vorderen Gleiter (52), auf dem der vordere Träger (51) montiert ist und der längs der Führung (Gd) gleitet;
einen hinteren Gleiter (54), auf dem der hintere Träger (53) montiert ist und der längs der Führung (Gd) gleitet;
**dadurch gekennzeichnet, dass**
a) der hintere Träger (43) sich in Bezug auf den vorderen Träger (51) geradlinig bewegen kann; und
b1) der vordere Träger (51) an dem vorderen Gleiter (52) drehbar montiert ist und der hintere Träger (53) an dem hinteren Gleiter (54) lösbar montiert ist oder
b2) der hintere Träger (53) an dem hinteren Gleiter (54) drehbar montiert ist und der vordere Träger (51) an dem vorderen Gleiter (52) lösbar montiert ist.

2. Spritzgießmaschine nach Anspruch 1, ferner umfassend:
einen Einspritzmotor (46), der das Einspritzelement (43) in Bezug auf den Zylinder vorwärts und rückwärts bewegt; und
einen Bewegungsumsetzungsmechanismus (55), der eine Drehbewegung des Einspritzmotors (46) in eine geradlinige Bewegung des hinteren Trägers (53) in Bezug auf den vorderen Träger (51) umsetzt.

3. Spritzgießmaschine nach Anspruch 2, wobei der Bewegungsumsetzungsmechanismus (55) eine Gewindewelle (56) und eine Gewindemutter (57), die auf die Gewindewelle (56) geschraubt ist, besitzt und der Einspritzmotor (46) entweder am vorderen Träger (51) oder am hinteren Träger (53) montiert ist und die Gewindewelle (56) oder die Gewindemutter (57) am anderen des vorderen Trägers (51) und des hinteren Trägers (53) montiert ist.

4. Spritzgießmaschine nach Anspruch 3, ferner umfassend:
einen Ausrichtmechanismus zum Ausrichten einer Mittellinie der Gewindewelle (56) auf eine Mittellinie der Gewindemutter (57).

5. Spritzgießmaschine nach Anspruch 3 oder 4, wobei die Gewindewelle (56) und die Führung (Gd) gegenseitig überlappen, wenn sie aus einer Richtung senkrecht zu einer festen Oberfläche der Führung (Gd) in dem Rahmen (Fr) betrachtet werden.

6. Spritzgießmaschine nach einem der Ansprüche 2 bis 5, wobei eine Vielzahl an Einspritzmotoren (46) symmetrisch in Bezug auf eine Mittellinie des Zylinders (41) als Zentrum angeordnet ist.

7. Spritzgießmaschine nach Anspruch 6, wobei die Vielzahl an Einspritzmotoren (46) angeordnet ist, um sie in einer Richtung senkrecht zu der festen Oberfläche der Führung (Gd) in dem Rahmen (Fr) zueinander zu verschieben.

## Revendications

1. Machine de moulage par injection comprenant :
un cylindre (41) dans lequel un matériau de moulage est amené ;
un support avant (51) qui supporte le cylindre (41) et avance et se rétracte par rapport à un bâti (Fr) ;
un élément d'injection (43) qui est disposé dans le cylindre (41) afin de pouvoir avancer et se rétracter ;
un support arrière (53) qui supporte l'élément d'injection (43) et avance et se rétracte par rapport au bâti (Fr) à l'arrière du support avant (51) ;
un guide (Gd) qui est fixé sur le bâti (Fr), dans laquelle le guide (Gd) est utilisé en tant que guide commun (Gd) pour le support avant (51) et le support arrière (53) ;
une glissière avant (52) sur laquelle le support avant (51) est monté, et qui coulisse le long du guide (Gd) ;
une glissière arrière (54) sur laquelle le support arrière (53) est monté, et qui coulisse le long du guide (Gd) ;
**caractérisée en ce que** :
a) le support arrière (53) peut se déplacer de manière linéaire par rapport au support avant (51) ; et
b1) le support avant (51) est monté, en rotation, sur la glissière avant (52), et le support arrière (53) est monté, de manière détachable, sur la glissière arrière (54), ou bien
b2) le support arrière (53) est monté, de manière rotative, sur la glissière arrière (54), et le support avant (51) est monté, de manière détachable, sur la glissière avant (52).

2. Machine de moulage par injection selon la revendication 1, comprenant en outre :
un moteur d'injection (46) qui fait avancer et rétracter le membre d'injection (43) par rapport au cylindrique ; et
un mécanisme de conversion de mouvement (55) qui convertit le mouvement de rotation du moteur d'injection (46) en mouvement linéaire du support arrière (53) par rapport au support avant (51).

3. Machine de moulage par injection selon la revendication 2, dans laquelle le mécanisme de conversion de mouvement (55) à une tige de vis (56) et un écrou de vis (57) qui est vissé sur la tige de vis (56), et
le moteur d'injection (46) est monté sur l'un parmi le support avant (51) et le support arrière (53) et la tige de vis (56) ou l'écrou de vis (57) est monté(e) sur l'autre parmi le support avant (51) et le support arrière (53).

4. Machine de moulage par injection selon la revendication 3, comprenant en outre :
un mécanisme d'alignement pour aligner une ligne centrale de la tige de vis (56) avec une ligne centrale de l'écrou de vis (57).

5. Machine de moulage par injection selon la revendication 3 ou 4, dans laquelle la tige de vis (56) et le guide (Gd) se chevauchent lorsqu'ils sont observés dans une direction perpendiculaire à une surface fixe du guide (Gd) dans le bâti (Fr).

6. Machine de moulage par injection selon l'une quelconque des revendications 2 à 5, dans laquelle une pluralité de moteurs d'injection (46) sont disposés de manière symétrique avec une ligne centrale du cylindre (41) en tant que centre.

7. Machine de moulage par injection selon la revendication 6, dans laquelle la pluralité de moteurs à injection (46) sont disposés pour être décalés les uns des autres dans une direction perpendiculaire à la surface fixe du guide (Gd) dans le bâti (Fr).
